# EUROPEAN PATENT SPECIFICATION

(11) **EP 4 098 922 B1**
(45) Date of publication and mention of the grant of the patent: **12.02.2025**
(21) Application number: 22176068.9
(22) Date of filing: 30.05.2022
(51) Int. Cl.: F16L 37/091, F16L 37/092

(54) **PIPE COUPLING FOR CONNECTION TO A PLASTIC CYLINDRICAL PIPE**
ROHRKUPPLUNG ZUM VERBINDEN MIT EINEM ZYLINDRISCHEN KUNSTSTOFFROHR
RACCORD DE TUYAU POUR LA CONNEXION À UN TUYAU CYLINDRIQUE EN PLASTIQUE

(30) Priority: 04.06.2021 NL 2028387
(43) Date of publication of application: 07.12.2022
(73) Proprietor: Dyka B.V., 8331 LJ Steenwijk (NL)
(72) Inventor: VAN DER BILT, Casper, 8331 LJ Steenwijk (NL); ZUURMOND, Johannes, 8331 LJ Steenwijk (NL)
(74) Representative: Geurts, Franciscus Antonius

(56) References cited:
- WO-A2-2019/235930
- GB-A- 2 205 136
- US-A- 4 293 149
- US-A1- 2006 244 258
- US-A1- 2011 304 137

## Description

### BACKGROUND

The invention relates to a pipe coupling for connection to a plastic cylindrical pipe. The plastic pipe for instance is a low-pressure water pipe, for instance for the drainage of sewage water. Such pipes are conventionally used for indoor (waste) water management, for example to connect sink drains, bathtub drains, shower drains, and other drains to the sewage system. In order to connect a drainage point to the sewer system while making optimal use of the available space and limitations, such pipes are typically assembled on-site using various fittings and connections to provide a pipe assembly which is unique to the house or building being fitted with the pipe assembly. Once assembled, it is important that the pipes are fixedly connected, such that vibrations and/or strain exerted on the piping system do not lead to defects. Today, the most commonly employed method to fixedly connect plastic pipes is still using glue to fix pipes to a pipe coupling. Glue has several disadvantages. For example, it is not environmentally friendly, it does not allow adjustments to be made after the glue has set, it often is applied incorrectly due to lack of knowledge about the pipe material and glue compatibilities, etc.

An alternative method to fixedly connect plastic pipes involves the use of a coupling in combination with clamping shells which are mounted after the pipe is inserted into the coupling and tightened using a screwdriver and thus represent a relatively complex manipulation for simply coupling two pipes.

Another alternative method to fixedly connect plastic pipes involves the use of pipe couplings such as for example described in WO2019/235930A2 which do not necessarily require glue. However, there is a need for further improved pipe couplings.

A further alternative method to couple plastic pipes is known from US 4 293 149, which describes a rapid coupling for plastic pipes, capable of being assembled by hand, comprising two cylindrical tubular pieces which are connected axially together by interlocking, with the interposition of a double-lipped gasket, the female piece being the receiver of the end of the pipe, the penetration of which causes the expansion of the female piece on the male piece, thus producing a watertight seal which is the greater, the higher the service pressure.

### SUMMARY OF THE INVENTION

It is an object of the present invention to provide a pipe coupling for connection to a plastic pipe that can be connected to the plastic cylindrical pipe in an environmentally friendly fashion, without the need for glue.

It is an object of the present invention to provide a pipe coupling for connection to a plastic pipe that can be assembled with one or more pipes in the factory, but still allows adjustments, e.g. of the angle between the pipes, on-site at a building or construction site. This allows prefab assemblies to be shipped in the most space-efficient manner while the connection angle needed can still be set on-site.

It is an object of the present invention to provide a pipe coupling for connection to a plastic pipe that can be connected to the plastic cylindrical pipe in a water-tight fashion.

It is an object of the present invention to provide a pipe coupling for connection to a plastic pipe that is easy to manufacture, for example by employing less complex parts than prior art pipe couplings.

It is an object of the present invention to provide a pipe coupling for connection to a plastic pipe that does not require complex manipulations for providing a fixed connection.

One or more of these objects are achieved by the pipe coupling according to the present invention.

According to a first aspect, the invention provides a pipe coupling configured for connection to a plastic cylindrical pipe, as defined in the independent claim 1.

The pipe coupling according to the invention has an insertion part which is provided with the sealing ring in the internal rebate. The locking ring may be arranged at the plastic cylindrical pipe before inserting the plastic pipe into the pipe coupling, or simultaneously with inserting the pipe into the pipe coupling, by inserting the plastic cylindrical pipe into the locking ring in the insertion direction. When the locking ring is arranged at the pipe, the barbing means of the locking ring engages the plastic cylindrical pipe such that the plastic cylindrical pipe is prevented from moving in a direction opposite to the insertion direction. During inserting the pipe into the pipe coupling, the pipe passes through the sealing ring, which engages the pipe in a sealing fashion such that a water-tight seal is provided between the plastic cylindrical pipe and the plastic casing of the pipe coupling. Additionally, the locking ring locks reversibly onto the casing such that the plastic pipe is prevented from being pulled out of the pipe coupling, while the locking ring remains locked to the casing. The invention, thus, has as an advantage that the pipe coupling may be connected to a pipe in a water-tight manner by simply inserting the pipe into the pipe coupling, therewith passing the sealing ring and the locking ring, such that the pipe coupling may be connected easily to a pipe on site, in particular without the use of glue.

A further advantage of the invention may be that the locking ring may be arranged at the plastic pipe in the factory, whereafter the plastic pipe together with the locking ring is arranged to the casing of the pipe coupling on site. Before arranging the locking ring to the casing, it may be possible to adjust the orientation of the plastic pipe, for example, with respect to the pipe coupling. Furthermore, since the locking ring is reversibly locked to the casing, the locking ring may be disengaged from the casing. This may allow a user to make adjustments to the orientation of the pipe with respect to the pipe coupling.

In the context of the present patent application, the locking ring with barbing means is preferably configured such that the axial pull force needed to move the inserted pipe in a direction opposite to the insert direction when the locking ring is locked to the casing, is at least twice the axial pull force needed to move the inserted pipe in a direction opposite to the insert direction of the same pipe coupling when the locking ring is absent or not locked to the casing.

According to the invention, the locking ring comprises a cylindrical circumferential wall having a free end edge, an abutting end edge, opposite to the free end edge, configured for abutting against the end face of the cylindrical accommodation wall, and an outer surface extending between the free end edge and the abutting end edge. Furthermore, the locking ring comprises one or more locking fingers configured for reversibly locking the locking ring onto the casing and provided at the abutting end edge, which locking fingers extend in a direction away from the cylindrical circumferential wall, and wherein, at the end facing away from the cylindrical circumferential wall, the locking fingers comprise an inward directed locking portion for locking the locking ring with respect to the casing. The locking fingers may be disengaged from the casing easily, for example by inserting a screwdriver under the locking fingers and slightly lifting them away from the casing. The combination of the sealing ring and the locking ring is such that the pipe is connected to the pipe coupling in a fixed and water-tight fashion, while disengagement of the one or more of locking fingers of the locking ring advantageously allows adjustments to the pipe position to be made.

In an embodiment, the barbing means extends into and oblique to the insert direction. An advantage of the barbing means extending into and oblique to the insert direction is that the plastic pipe is allowed to inserted into the locking ring in the insert direction and is prevented from moving in a direction opposite to the insert direction, while the locking ring is locked to the casing.

In an embodiment, the barbing means of the locking ring comprises two or more barbing fingers configured for engaging the plastic cylindrical pipe, wherein the two or more barbing fingers project inwardly from the cylindrical circumferential wall into and oblique to the insert direction and are distributed around the cylindrical circumferential wall. Preferably the barbing means of the locking ring comprises 4 or more barbing fingers, preferably 8 or more barbing fingers. In an embodiment thereof, the two or more barbing fingers are made of metal, preferably wherein the locking ring is completely made of metal. After the plastic cylindrical pipe is inserted into the locking ring, when a pull force is exerted in the direction opposite to the insert direction, the metal barbing fingers penetrate slightly into the plastic cylindrical pipe, therewith preventing the plastic cylindrical pipe to move with respect to the pipe coupling in a direction opposite to the insert direction.

In an embodiment, the barbing means comprises a barbing flap configured for engaging the plastic cylindrical pipe. In an embodiment thereof, the barbing flap is provided at the inner surface of the cylindrical circumferential wall of the locking ring, wherein the barbing flap extends from the inner surface into and oblique to the insert direction. In an even further embodiment thereof, the barbing flap is provided with a barbing means pilot surface oriented into and oblique to the insert direction, wherein optionally an annular space is situated between the barbing flap and the inner surface of the cylindrical circumferential wall of the locking ring. Due to the annular space, the barbing flap is able to bend in the direction of the cylindrical circumferential wall of the locking ring, therewith enabling the plastic cylindrical pipe to be inserted into the locking ring. Additionally, due to the inwardly oriented barbing means pilot surface and, optionally, the annular space, the pipe can be inserted without having to be provided with an end beveling and without the necessity of applying a lubricant. When the pipe has been inserted, the barbing flap engages onto the pipe in a barbing fashion such that the plastic pipe is prevented from moving to the locking ring in a direction opposite to the insert direction.

It is noted that in the context of the present patent application, the diameter of the opening formed by the two or more barbing fingers or by the barbing flap is, preferably slightly, smaller than the outside diameter of the pipe to be inserted.

In an embodiment, the barbing flap is provided with a slit defining an interruption in the barbing flap in the circumferential direction, preferably extending into and oblique to the insert direction. This slit that defines an interruption advantageously contributes to the barbing flap being enabled to deflect outwards while a pipe is inserted into the locking ring.

In an embodiment, the outer surface of the casing is provided with a locking edge, and the locking edge and the locking ring are configured such that the locking ring reversibly engages behind the locking edge, when seen in the insert direction. In an embodiment thereof, at the diameter step, the outer surface of the insertion wall merges into the outer surface of the circumferential accommodation wall having a larger outside diameter than the insertion wall, therewith defining the locking edge. The diameter step therewith defines the locking edge at the outer surface of the casing. An advantage of this embodiment is that the locking ring may be locked reversibly to the casing at the locking edge defined by the diameter step.

In an embodiment, the sealing ring comprises a base ring and a flexible engaging ring, wherein the engaging ring extends from the base ring at the side thereof facing away from the insertion opening and is configured for engaging the plastic cylindrical pipe in a water-tight manner. The engaging ring contributes to watertightness between the plastic cylindrical pipe and the sealing ring, such that a water-tight connection is obtained. In the context of the present invention, watertight means that the connection is water-tight at an internal pressure of 1 bar.

In an embodiment, the base ring has a cylindrical outer surface at which a, preferably triangular, securing rib is arranged, and the circumferential accommodation wall has a complementary, preferably triangular, securing recess configured for receiving the triangular securing rib. In a preferred embodiment thereof, the triangular securing rib has an oblique surface directed away from the insertion opening. The triangular securing rib and the triangular securing recess prevent the sealing ring from being removed from the casing unintentionally. In particular, the oblique surface of the triangular securing rib and, thus, of the triangular securing recess allows the sealing ring to be inserted into the rebate, and prevents the sealing ring from being removed from the casing while a pipe is inserted into the pipe coupling. Furthermore, the securing rib and the securing recess may contribute to the water-tight seal between the plastic cylindrical pipe and the casing.

In an embodiment, the base ring, at the end facing towards the insertion opening, is provided with an oblique sealing ring pilot surface. An advantage of the oblique sealing ring pilot surface of the base ring is that the pipe may be inserted without the need for an end beveling and without the necessity of applying a lubricant.

In an embodiment, the engaging ring extends away from the base ring towards the center of the insertion part, such that the engaging ring is inclined with respect to the base ring. As a result, the engaging ring has to be bent outwardly by the pipe, during insertion of the pipe. Due to be engaging ring being orientated towards the center of the pipe and due to the engaging ring being manufactured of a flexible material, the engaging ring has the tendency to bend back into its unbiased position, *i.e.* the position in which no pipe passes through the sealing ring. Since the engaging ring has the tendency to bend back into its unbiased position, the engaging ring advantageously applies a clamping force to the inserted pipe, therewith engaging the inserted pipe in a sealing manner.

In an embodiment, the engaging ring, at the end facing away from the base ring, is provided with one or more, preferably circumferential, engaging ridges facing towards the center of the insertion part and, optionally, to the insertion opening, and configured for engaging the pipe to be inserted. The engaging ridges advantageously increase the engaging surface of the engaging ring for engaging the pipe.

In an embodiment, the engaging ring, at the end facing away from the base ring, is provided with a, preferably circumferential, clamping projection extending towards the inner surface of the insertion part, preferably in a direction opposite to the one or more engaging ridges. When the engaging ring is bent outwards by the pipe, the clamping projection is pushed against the inner surface of the circumferential insertion wall. Due to the clamping material being flexible, the clamping projection is deformed while being pushed against the inner surface of the circumferential insertion wall. As the clamping projection is made of flexible material, the clamping projection wants to bend back into its original orientation, *i.e.* the orientation it has when no pipe is inserted. As a result thereof, the clamping projection pushes the engaging ring towards the pipe and, therefore, applies a clamping force to the pipe. This is advantageous as it improves the seal of the engaging ring to the pipe.

In an embodiment, the internal rebate is a second internal rebate, the circumferential accommodation wall is a second circumferential accommodation wall and the diameter step is a second diameter step, wherein the circumferential insertion wall merges via a first diameter step into a first circumferential accommodation wall having a larger inside diameter, therewith forming a first internal rebate, and the first circumferential accommodation wall merges via the second diameter step into the second circumferential accommodation wall having a larger inside diameter than the first circumferential accommodation wall, therewith forming the second internal rebate. In an embodiment thereof, the base ring is located within the second internal rebate, while the engaging ring is located at least partially within the first internal rebate, and the clamping projection is configured for abutting against the inner surface of the first circumferential wall. In this embodiment, the base ring abuts the second diameter step, thereby holding the base ring in place.

In an embodiment, at the exterior side of the accommodation wall, the casing is provided with a projecting rib that is arranged along the circumference. The projecting rib provides the possibility to secure, or to click, the locking ring to the casing. The projecting rib can advantageously be the external equivalent of the second diameter step in case a constant wall thickness is maintained, such that the locking ring may lock behind the projecting rib, when seen in the insert direction, in order to lock the locking ring to the casing.

According to a second aspect, the invention provides an assembly of a plastic cylindrical pipe and a pipe coupling for connection to the plastic pipe according to the first aspect of the invention.

According to a third aspect, the invention provides a method for assembling a pipe coupling for connection to a plastic cylindrical pipe, wherein the pipe coupling is a pipe coupling according to the first aspect of the invention, wherein the method comprises the steps of:
- inserting the sealing ring into the insertion part, in particular into the internal rebate;
- arranging the locking ring; and
- inserting the plastic cylindrical pipe into the pipe coupling.

In an embodiment, the step of arranging the locking ring comprises the step of arranging the locking ring at the plastic casing, and the step of inserting the plastic cylindrical pipe comprises the step of inserting the plastic cylindrical pipe through the sealing ring and the locking ring.

In an embodiment, the step of arranging the locking ring comprises the step of arranging the locking at the plastic cylindrical pipe, and the step of inserting the plastic cylindrical pipe comprises the steps of inserting the plastic cylindrical pipe through the locking ring and arranging the locking ring to the plastic casing.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figures 1A and 1B show an isometric view of a pipe coupling for pipes according to an embodiment of the invention, and a partially exploded isometric view thereof, respectively;
Figures 2A and 2B show a longitudinal section and a straight view of a detail thereof of the pipe coupling according to figures 1A - 1B;
Figures 3A and 3B show an isometric longitudinal section and a straight view of a detail thereof of the pipe coupling according to figures 1A-1B and 2A-2B once a pipe has been inserted and secured therein;
Figures 4A and 4B show an isometric view of a pipe coupling for pipes according to another embodiment of the invention, and a partially exploded isometric view thereof, respectively;
Figures 5A and 5B show a longitudinal section and a straight view of a detail thereof of the pipe coupling according to figures 4A - 4B;
Figures 6A and 6B show an isometric longitudinal section and a straight view of a detail thereof of the pipe coupling according to figures 4A-4B and 5A-5B once a pipe has been inserted and secured therein; and
Figure 7 shows an alternative embodiment of a casing and a sealing ring of the pipe coupling of figures 1A-1B and 4A-4B.

### DETAILED DESCRIPTION OF THE INVENTION

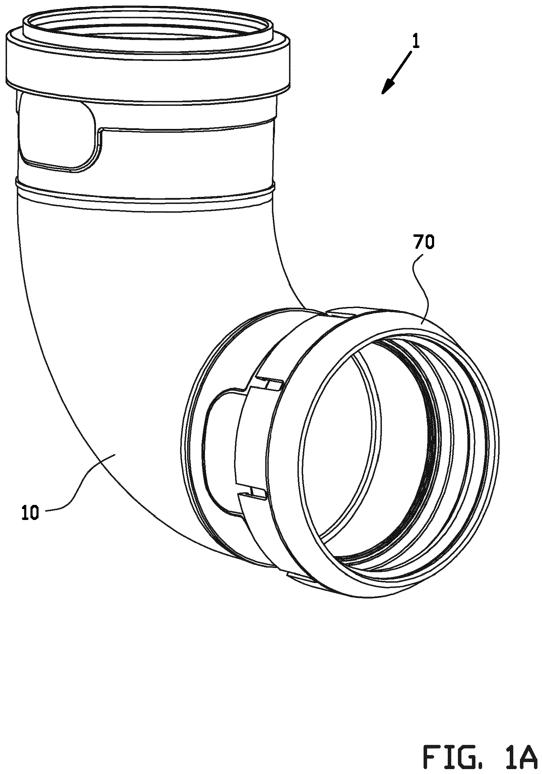

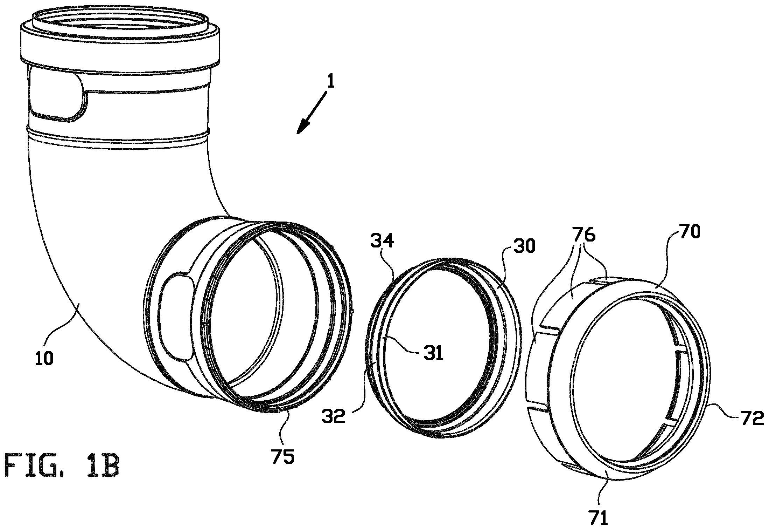

An isometric view and an exploded view of pipe coupling 1, in this example an elbow pipe coupling, for coupling two plastic cylindrical pipes 2 according to an embodiment of the invention are shown in figures 1A and 1B, respectively.

The plastic cylindrical pipes 2 are low-pressure water pipes, for instance for the drainage of sewage water. In this example, the pipes 2 have a circle-cylindrical circumferential wall 3 with a smooth outer surface 4. The outside diameter of the pipes 1 typically is 32 millimeters, 40 millimeters, 50 millimeters, 75 millimeters, 90 millimeters, 110 millimeters, 125 millimeters, 160 millimeters or 200 millimeters. The pipes 1 are manufactured of a plastic material. Examples of suitable plastic materials are polyethylene (PE), polypropylene (PP), or polyvinyl chloride (PVC).

The pipe coupling 1 is configured for entering into a watertight coupling with the pipes 2 without gluing them together. The pipe coupling 1 comprises a casing 10 made of plastic material, in this example an olefin-based thermoplastic plastic material, preferably polyethylene (PE), polypropylene (PP) or polyvinyl chloride (PVC), or a thermoplastic bioplastic, preferably polylactic acid (PLA). Alternatively, the casing 10 is manufactured of a thermo-setting plastic material or a composite plastic material. The plastic material may be fiber-reinforced plastic material.

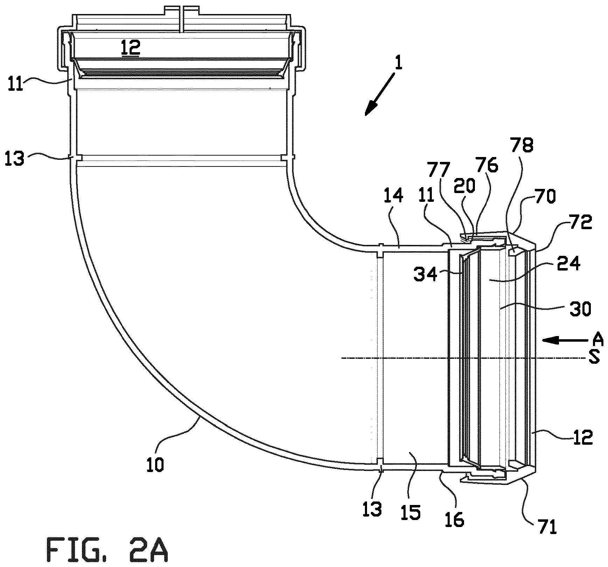

As shown in figure 2A, the casing 10 is built symmetrically, having a center line S for the circumferential parts in this example having a constant radius. The casing 10 comprises two insertion parts 11 having insertion openings 12 for inserting the pipes 2 in direction A parallel to the center line S. The two insertion parts 11 each terminate in a circumferential internal central bumper 13. In this example the pipe coupling is the elbow pipe coupling 1, but other configurations are also possible, such as a T-pipe coupling, Y-coupling or bend in which the insertion parts 11 have a different mutual orientation. The pipe coupling 1 will be described below on the basis of the insertion part 11 and the parts accommodated therein on the right-hand side in the figures.

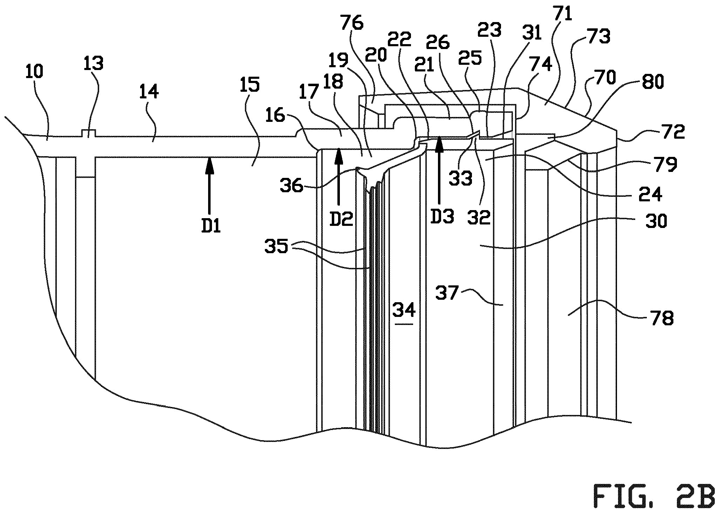

As can best be seen in figures 2A and 2B, the casing 10 comprises a cylindrical insertion wall 14 having a smooth inner surface 15 in which the plastic pipe 2 fits. Its inside diameter D1 corresponds to the outside diameter of the inserted pipe 2 wherein a small positive tolerance has been used so that the pipe 1, once inserted in direction A, can be shifted back and forth. Via a first diameter step 16, the insertion wall 14 merges into a first cylindrical accommodation wall 17 having a larger inside diameter D2 and having a smooth inner surface 18. It forms a first circumferential internal rebate 19. Via a second diameter step 20, the first accommodation wall 17 merges into a second cylindrical accommodation wall 21 having a larger inside diameter D3 and having a smooth third inner surface 22. It forms a second circumferential internal rebate 23 in which a sealing ring, in the form of an insert ring 24 is accommodated. As shown, for example, in figure 2A, the first and second diameter step 16, 20 are also present at the outer surface of the casing 10.

At the exterior side of the second accommodation wall 21, the casing 10 is provided with a projecting rib 25 that is arranged along the circumference. The projecting rib 25 has a rounded shape. A washer or locking ring 70 has been placed over the second accommodation wall 21, which washer is placed over the projecting rib 25, therewith clicking the locking ring 70 onto the casing 10 at a locking edge formed by the second diameter step diameter 20 at the outer surface of the casing 10, and which confines the insert ring 24.

As best shown in figure 1B and 2B, the insert ring 24 is provided with a base ring 30 that is closed all around. The base ring 30 has a cylindrical outer surface 31 which under a small tolerance abuts the third inner surface 22 of the second cylindrical accommodation wall 21. Thus, the base 30 is located within the second circumferential internal rebate 23. The cylindrical outer surface 31 is provided with a triangular securing rib 32, having an oblique surface 33 directed away from the insertion opening 12. The triangular securing rib 32 is received within a complementary triangular securing recess 26 provided at the third inner surface 22 of the second cylindrical accommodation wall 21. Furthermore, at the end of the base ring 30 facing towards the insertion opening 12, the base ring 30 is provided with an oblique sealing ring pilot surface 37. Due to the oblique sealing ring pilot surface 37, the pipe 2 may be inserted without the pipe 2 having to be provided with an end beveling and without the necessity of applying a lubricant.

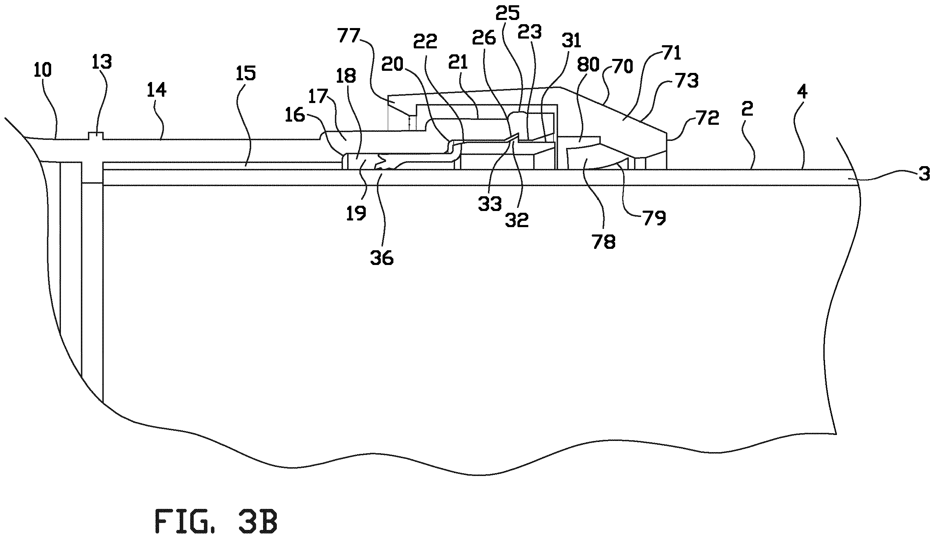

The insert ring 24 is further provided with an engaging ring 34 arranged at the base ring 30, in particular at the side of the base ring facing away from the insertion opening 12. As best shown in figure 2B, the engaging ring 34 is extending away from the base ring 30 into the first circumferential internal rebate 19 and towards the center line S, such that the engaging ring 34 is inclined with respect to the first cylindrical accommodation wall 17. At the end of the engaging ring 34 facing away from the base ring 30, the engaging ring 34 is provided with a number of circumferential engaging ridges 35 facing towards the center line S and towards the insertion opening 12. Additionally, at the end of the engaging ring 34 facing away from the base ring 30, the engaging ring 34 is provided with a circumferential clamping projection 36 extending in a direction opposite to the engaging ridges 35. The clamping projection 36 is configured to abut against the smooth inner surface 18 of the first cylindrical accommodation wall 17, therewith deforming as shown in figure 3B. As the clamping projection has the tendency to move back into its orientation as shown in figure 2B, a clamping force may be applied to the inserted plastic pipe 2.

For example, the insert ring 24 may be manufactured by means of 2K injection moulding. In that case, the base ring 30 is preferably manufactured of polyethylene (PE), polypropylene (PP), polyvinyl chloride (PVC), or a thermoplastic bioplastic, preferably polylactic acid (PLA) while the engaging ring 34 is manufactured from a flexible plastic material, in this example a thermoplastic elastomer (TPE) or technical rubber, preferably an olefin-based cross-linked thermoplastic elastomer (thermoplastic vulcanizates - TPV) or Ethylene Propylene Diene Monomer (EPDM). Alternatively, the base ring 30 is manufactured of a thermo-setting plastic material or a composite plastic material. The plastic material may be fiber-reinforced plastic material. In order to increase the hardness, glass in the form of glass particles can be mixed into the plastic material. Alternatively, the base ring 30 is manufactured of a metal.

The sealing ring, and in particular, the flexible engaging ring 34 in case the sealing ring is provided in the form of an insert ring 24, may be manufactured of a flexible plastic material, preferably a thermoplastic elastomer (TPE), technical rubber, SBR, NBR, silicone or PUR, for example an olefin-based cross-linked thermoplastic elastomer (thermoplastic vulcanizates - TPV) or Ethylene Propylene Diene Monomer (EPDM).

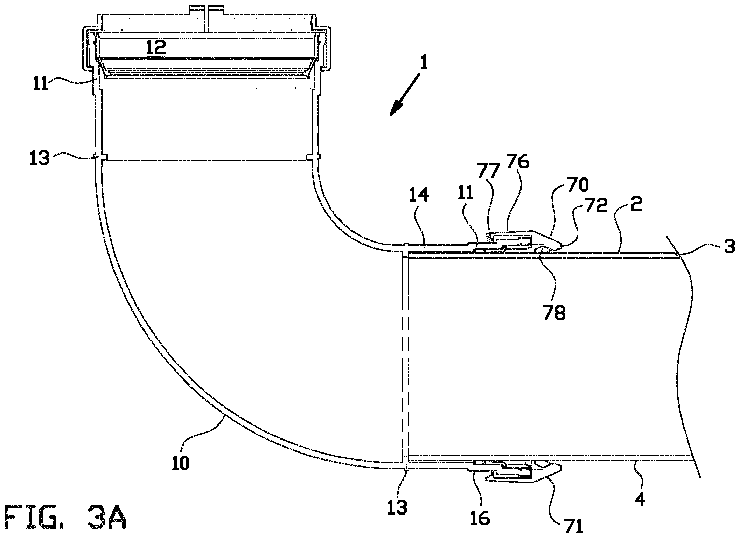

When the pipe 2 is inserted into the pipe coupling 1, the engaging ring 34 is forced towards the smooth inner surface 18 of the first circumferential internal rebate 19 while the circumferential engaging ridges 35 engage the outer surface of the pipe 2. The clamping projection 36 is bent against the smooth inner surface 18, as best shown in figures 3A and 3B. Due to the flexibility of the engaging ring 34, in particular due to the orientation of the clamping projection 36, the engaging ring 34 applies a clamping force onto to the pipe 2. As a result, the pipe 2 may be inserted through the insert ring 24 relatively easily, while the insert ring 24 engages the pipe 2 in a water-tight manner and provides a water-tight seal between the outer surface 4 of the pipe 2 and the smooth inner surface 18 of the first internal rebate 19.

As best shown in figures 1B and 2B, the locking ring 70 comprises a cylindrical circumferential wall 71 having a free end edge 72 and having an outer surface 73 that is inclined with respect to the center line S, i.e. that is tapered away from the insertion opening 12. Opposite to the free end edge 72, the cylindrical circumferential wall 71 has an abutting end edge 74 configured for abutting against the end face 75 of the second cylindrical accommodation wall 21. Furthermore, a plurality of locking fingers 76 is provided at the abutting end edge 74, which locking fingers 76 extend in a direction away from the cylindrical circumferential wall 71 and substantially parallel to the center line S. At the end facing away from the cylindrical circumferential wall 71, the locking fingers 76 comprise an inward directed locking portion 77 for locking the locking ring 70 with respect to the casing 10, in particular by engaging the locking edge at the second diameter step 20. It is noted that the gap between the inward directed locking portion 77 and the outer surface of the second cylindrical accommodation wall 21 is shown for illustrative purposes only, and that the inward directed locking portion 77 and the outer surface of the second cylindrical accommodation wall 21 actually are in contact with each other to lock the locking ring 70 to the casing 10.

As best shown in figures 2B, 3A and 3B, the cylindrical circumferential wall 71 has a barbing flap 78 provided at the inner surface thereof. The barbing flap 78 extends from the inner surface inwardly and into the insertion direction A, and is configured to allow the pipe 2 to be inserted into the locking ring 2 while being moved in the insert direction A. The barbing flap 78 is provided with an inwardly oriented barbing means pilot surface 79 oblique to the center line S. An annular space 80 is situated between the barbing flap 78 and the inner surface of the cylindrical circumferential wall of the locking ring, *i.e.* when seen in the insert direction A behind the barbing flap 78, allowing the barbing flap 78 to bend in the direction of the inner surface of the cylindrical circumferential wall 71. Due to the inwardly oriented barbing means pilot surface 79 and optionally the annular space 80, the pipe 2 can be inserted without the pipe 2 having to be provided with an end beveling and without the necessity of applying a lubricant. When the pipe 2 has been inserted, the barbing flap 78 engages onto the pipe 2 like a barb in order to prevent the pipe 2 to move with respect to the locking ring 70 in a direction opposite to the insert direction A.

The locking ring 70, in particular the cylindrical circumferential wall 71 thereof, is preferably manufactured of polyethylene (PE), polypropylene (PP), polyvinyl chloride (PVC), or a thermoplastic bioplastic, preferably polylactic acid (PLA). Alternatively, the base cylindrical circumferential wall 71 is manufactured of a thermo-setting plastic material or a composite plastic material. The plastic material may be fiber-reinforced plastic material. In order to increase the hardness, glass in the form of glass particles can be mixed into the plastic material.

The barbing flap 78 may be manufactured of metal or, preferably, a flexible plastic material, preferably a thermoplastic elastomer (TPE), technical rubber, SBR, NBR, silicone or PUR, for example an olefin-based cross-linked thermoplastic elastomer (thermoplastic vulcanizates - TPV) or Ethylene Propylene Diene Monomer (EPDM). The barbing flap 78 may also be manufactured of polyethylene (PE), polypropylene (PP), polyvinyl chloride (PVC), or a thermoplastic bioplastic, preferably polylactic acid (PLA) provided that it is carefully dimensioned such that sufficient flexibility remains for the barbing flap 78 to bend without breaking towards the inner surface of the cylindrical circumferential wall 21 of the locking ring 70 upon insertion of a pipe 2, to allow the pipe 2 to be inserted, while still exerting sufficient force to prevent the pipe 2 from being pulled out of the pipe coupling 1.

The pipe coupling 1 may be assembled by inserting the sealing ring 24 into the second internal rebate 23, such that the engaging ring 34 is located at least partially within the first internal rebate 19. The sealing ring 24 is secured to the casing 10 by the triangular securing rib 32 being received within the complementary triangular securing recess 26. Subsequently, the locking ring 70 may be secured to the casing 10 by clicking the locking ring 10 onto the casing 10, whereafter the pipe 2 may be inserted into the pipe coupling 1 by being inserted consecutive through the locking ring 70 and the insert ring 24. Alternatively, the sealing ring 24 is inserted into the second internal rebate 23, such that the engaging ring 34 is located within the first internal rebate 19 at least partially, while the locking ring 70 is arranged at the pipe 2 before inserting the pipe 2 into the pipe coupling 1. Subsequently, the pipe 2 is inserted into the pipe coupling 1, wherein the pipe 2 is inserted through the sealing ring 24. Additionally, the locking ring 70 may be moved along with the pipe 2 in order to click the locking ring 70 onto the casing 10 of the pipe coupling 1. The pipe 2 is sealed to the casing 10 of the pipe coupling 1 by the engaging ring 34 that is located between the outer surface 4 of the pipe 2 and the smooth inner surface 18 of the first internal rebate 19, while the locking ring 70 makes it difficult or in the ideal case impossible to unintentional remove the pipe 2 from the pipe coupling 1, in particular the casing 10 thereof.

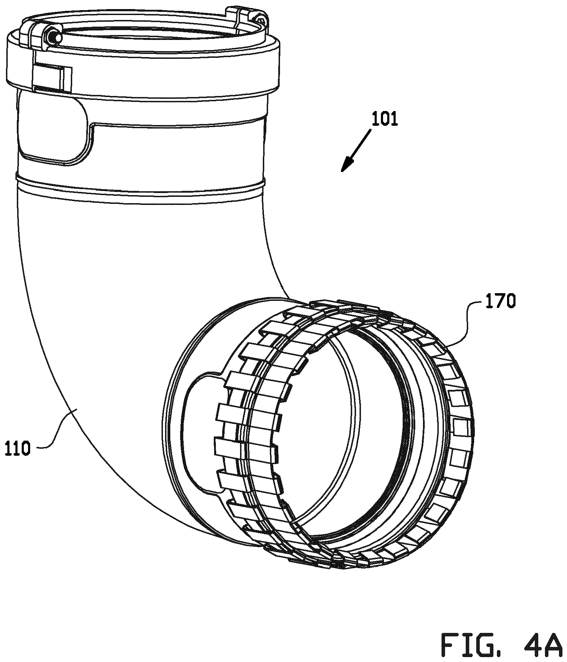

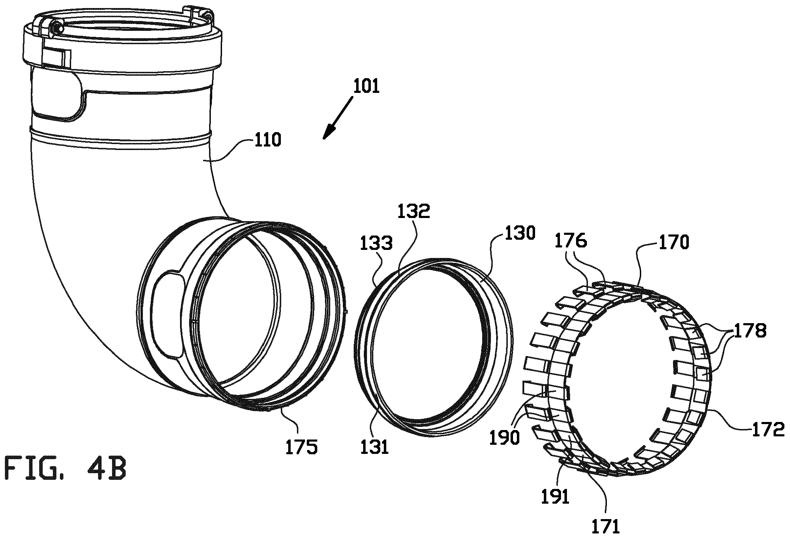

An isometric view and an exploded view of pipe coupling 101, in this example an elbow pipe coupling, for coupling two plastic cylindrical pipes 102 according to another embodiment of the invention are shown in figures 4A and 4B, respectively. In order to refrain from reintroducing similar or corresponding features, similar or corresponding features are referred to by the same reference numbers as used in relation to figures 1A-3B increased with 100.

The embodiment of the pipe coupling 101 differs from the previous embodiment of the pipe coupling 1 in the locking ring 170.

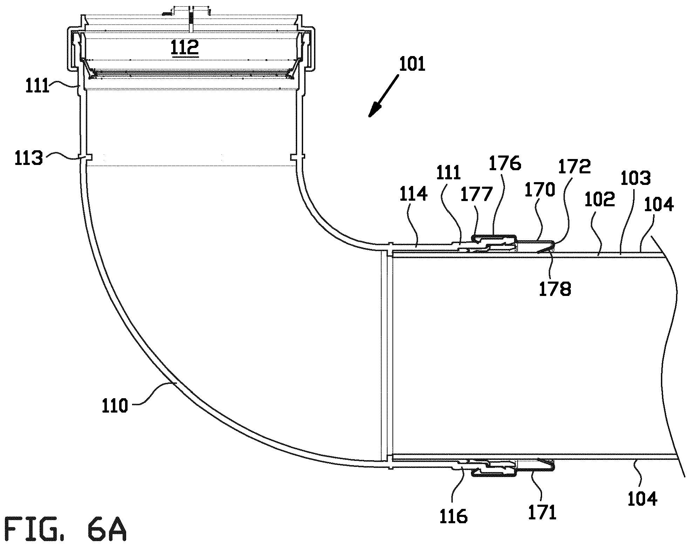

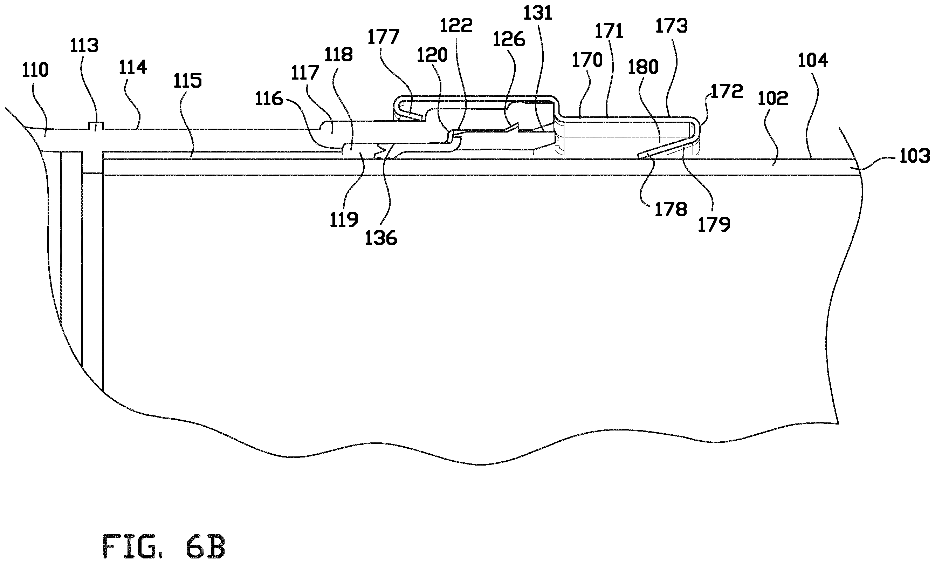

As clear shown in figure 4A, 4B, 5A, 5B, 6A and 6B, the locking ring 170 comprises a cylindrical circumferential wall 171 having a free end edge 172 and having an outer surface 173 that is substantially parallel or parallel to the center line S. Opposite to the free end edge 172, the cylindrical circumferential wall 171 has an abutting end edge 174 configured for abutting against the end face 175 of the second cylindrical accommodation wall 121. Furthermore, a plurality of locking fingers 176 is provided at the abutting end edge 174, which locking fingers 176 extend in a direction away from the cylindrical circumferential wall 171 and substantially parallel to the center line S. At the end facing away from the cylindrical circumferential wall 171, each of the locking fingers 176 is bent to form a locking portion 177 directed towards and inclined to the center line S in a direction opposite to the insert direction A. The locking fingers 176 are configured for locking the locking ring 170 with respect to the casing 110.

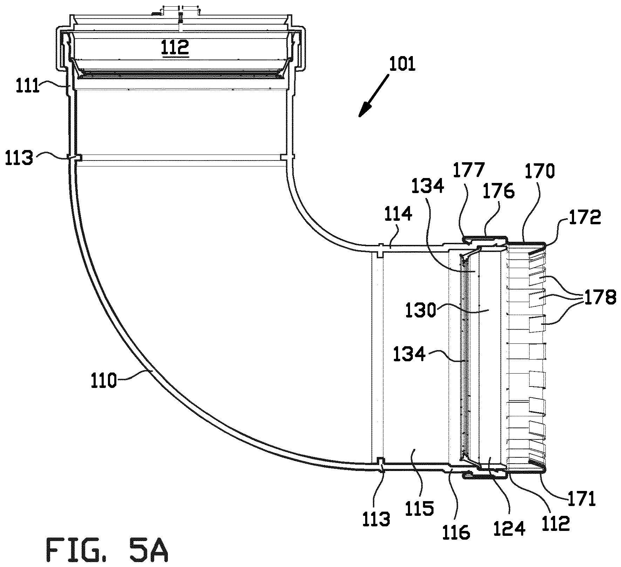

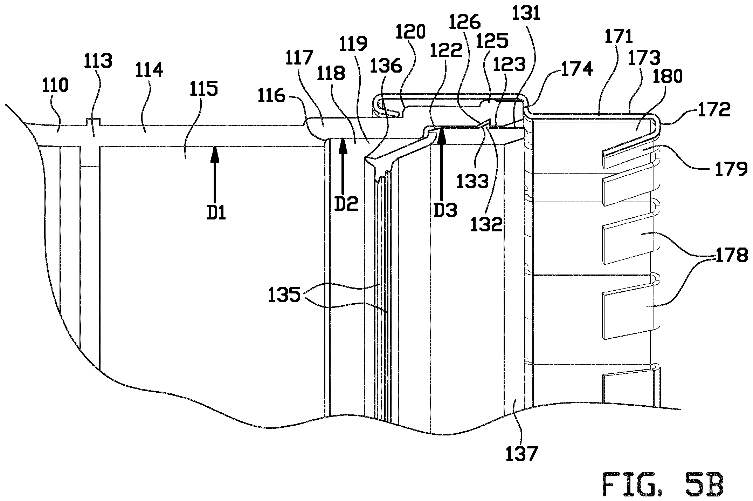

As shown in figures 4B, 5B an 6B, the locking ring 170 further comprises a plurality of barbing fingers 178 distributed circumferentially at the circumferential wall 171. The barbing fingers 178 extend from the free end edge 172 of the circumferential wall 171 towards the abutting edge 174, while being oriented towards and inclined to the center line S. Each of the barbing fingers 178 is provided with an inwardly oriented barbing means pilot surface 179 oblique to the center line S. An annular space 180 is situated below the barbing fingers 178 allowing the barbing fingers 178 to bend in the direction of the inner surface of the cylindrical circumferential wall 171.

As best shown in figure 4B, the barbing fingers 178 and the locking fingers 176 are formed of metal strips 190. Each of the metal strips 190 is arranged at the circumferential wall 171 by means of a securing portion 191, wherein the barbing finger 178 and the locking finger 176 of a respective metal strip 190 are formed by bending the metal strip 190 at opposite sides of the securing portion 191.

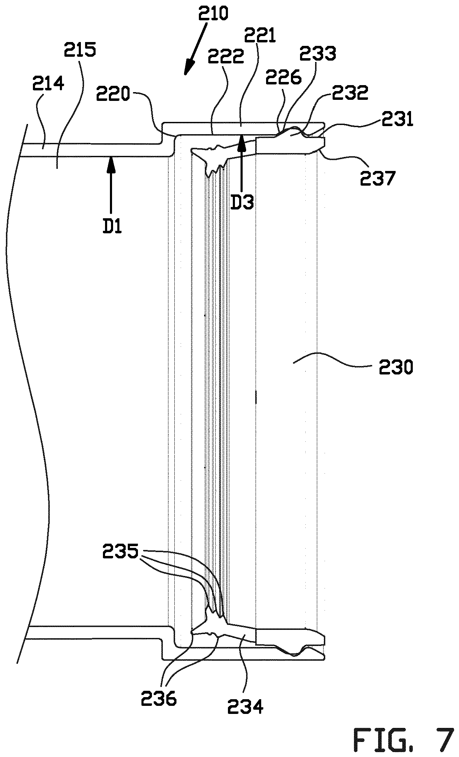

An alternative embodiment of a casing 10 and of a sealing ring 24 of the pipe coupling 1 of figures 1A-1B and 4A-4B is shown in figure 7. In order to refrain from reintroducing similar or corresponding features, similar or corresponding features are referred to by the same reference numbers as used in relation to figures 1A-3B increased with 200.

This embodiment of the casing 210 differs from the casing 10 as described in relation to figures 1A-3B in that this casing 210 has an insertion wall 214 that merges via a diameter step 220 into a cylindrical accommodation wall 221 having a larger inside diameter D3 and having a smooth inner surface 222. It forms a circumferential internal rebate 223 in which the sealing ring, in the form of the insert ring 224 is accommodated. Thus, in comparison with the casings 10, 110 described above, this casing 210 has a single diameter step 220 and a single internal rebate 223 in which the sealing ring 224 is accommodated.

The sealing ring 224 differs from the sealing rings 24, 124 as described above in that at the end of the engaging ring 234 facing away from the base ring 230, the engaging ring 234 is provided with multiple circumferential clamping projections 236 extending in a direction opposite to the engaging ridges 235. The multiple clamping projections 236 are configured to abut against the smooth inner surface 222 of the cylindrical accommodation wall 221.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

## Claims

1. Pipe coupling (1; 101) configured for connection to a plastic cylindrical pipe (2), wherein the pipe coupling (1; 101) comprises:
an insertion part (11) with an insertion opening configured for allowing the plastic cylindrical pipe (2) to be inserted into the pipe coupling (1; 101) in an insert direction (A),
wherein the insertion part (11) comprises a plastic casing (10; 110; 210) that is provided with a circumferential insertion wall (14) in which the pipe (2) fits, wherein via a diameter step (16, 20) the insertion wall (14) merges into a circumferential accommodation wall (17, 21) having a larger inside diameter than the insertion wall, wherein the accommodation wall bounds an internal rebate (19, 23);
a sealing ring (24; 124; 224) inserted into the rebate (19, 23) bound by the accommodation wall and configured for engaging the plastic cylindrical pipe (2) in a sealing manner and for providing a water-tight seal between the pipe (2) and the plastic casing (10; 110; 210); and
a locking ring (70; 170) having a barbing means (78; 178) configured for engaging the plastic cylindrical pipe (2) such that the plastic cylindrical pipe is allowed to be inserted into the locking ring (70; 170) in the insert direction and is prevented from moving in a direction opposite to the insert direction, wherein the locking ring is configured to reversibly lock onto the casing,
wherein the locking ring (70; 170) comprises a cylindrical circumferential wall (71; 171) having a free end edge (72; 172), an abutting end edge (74; 174), opposite to the free end edge (72; 172), configured for abutting against the end face (75; 175) of the cylindrical accommodation wall (17, 21; 121), and an outer surface (73; 173) extending between the free end edge and the abutting end edge,
wherein the locking ring (70; 170) comprises one or more locking fingers (76; 176) configured for reversibly locking the locking ring (70; 170) onto the casing (10; 110; 210), which locking fingers extend in a direction away from the cylindrical circumferential wall,
**characterized in that** the locking fingers are provided at the abutting end edge, and **in that**, at the end facing away from the cylindrical circumferential wall, the locking fingers comprise an inward directed locking portion (77; 177) for locking the locking ring with respect to the casing.

2. Pipe coupling (1; 101) according to claim 1, wherein the barbing means (78; 178) extends into and oblique to the insert direction; and/or
wherein the barbing means (178) of the locking ring (170) comprises two or more barbing fingers (178) configured for engaging the plastic cylindrical pipe (2), wherein the two or more barbing fingers (178) project inwardly from the cylindrical circumferential wall into and oblique to the insert direction and are distributed around the cylindrical circumferential wall, preferably wherein the barbing means of the locking ring comprises 4 or more barbing fingers, preferably 8 or more barbing fingers, preferably wherein the two or more barbing fingers are made of metal, preferably wherein the locking ring (170) is completely made of metal.

3. Pipe coupling (1) according to any one of the claims 1-2, wherein the barbing means comprises a barbing flap (78) configured for engaging the plastic cylindrical pipe.

4. Pipe coupling (1) according to claim 3, wherein the barbing flap (78) is provided at the inner surface of the cylindrical circumferential wall of the locking ring (70), wherein the barbing flap (78) extends from the inner surface into and oblique to the insert direction, preferably wherein the barbing flap (78) is provided with a barbing means pilot surface (79) oriented into and oblique to the insert direction, wherein optionally an annular space (80) is situated between the barbing flap (78) and the inner surface of the cylindrical circumferential wall of the locking ring (70).

5. Pipe coupling (1) according to any one of the claims 3-4, wherein the barbing flap (78) is provided with a slit defining an interruption in the barbing flap (78) in the circumferential direction, preferably extending into and oblique to the insert direction.

6. Pipe coupling (1; 101) according to any one of the preceding claims, wherein the outer surface of the casing is provided with a locking edge, and wherein the locking edge and the locking ring (70; 170) are configured such that the locking ring (70; 170) reversibly engages behind the locking edge, when seen in the insert direction, preferably wherein, at the diameter step, the outer surface of the insertion wall merges into the outer surface of the circumferential accommodation wall having a larger outside diameter than the insertion wall, therewith defining the locking edge.

7. Pipe coupling (1; 101) according to any one of the preceding claims, wherein the sealing ring is provided in the form of an insert ring (24; 124; 224) comprising a rigid base ring (30; 130; 230) and a flexible engaging ring (34; 134; 234), wherein the engaging ring extends from the base ring at the side thereof facing away from the insertion opening and is configured for engaging the plastic cylindrical pipe in a water-tight manner; and/or
wherein at the exterior side of the accommodation wall, the casing is provided with a projecting rib (25) that is arranged along the circumference.

8. Pipe coupling (1; 101) according to claim 7, wherein the base ring has a cylindrical outer surface at which a, preferably triangular, securing rib (32) is arranged, and the circumferential accommodation wall has a complementary, preferably triangular, securing recess (26) configured for receiving the triangular securing rib (32), preferably wherein the triangular securing rib (32) has an oblique surface (33) directed away from the insertion opening.

9. Pipe coupling (1; 101) according to any one of the claims 7-8, wherein the base ring, at the end facing towards the insertion opening, is provided with a sealing ring oblique pilot surface (37); and/or
wherein the engaging ring extends away from the base ring towards the center of the insertion part, such that the engaging ring is inclined with respect to the base ring.

10. Pipe coupling (1; 101) according to any one of the claims 7-9, wherein the engaging ring, at the end facing away from the base ring, is provided with one or more, preferably circumferential, engaging ridges (35; 235) facing towards the center of the insertion part and, optionally, to the insertion opening, and configured for engaging the pipe to be inserted.

11. Pipe coupling (1; 101) according to claim 10, wherein the engaging ring, at the end facing away from the base ring, is provided with a, preferably circumferential, clamping projection (36; 236) extending towards the inner surface of the insertion part, preferably in a direction opposite to the one or more engaging ridges.

12. Pipe coupling (1; 101) according to any one of the preceding claims, wherein the internal rebate is a second internal rebate (23), the circumferential accommodation wall is a second circumferential accommodation wall (21) and the diameter step is a second diameter step (20), wherein the circumferential insertion wall merges via a first diameter step (16) into a first circumferential accommodation wall (17) having a larger inside diameter, therewith forming a first internal rebate (19), and the first circumferential accommodation wall (17) merges via the second diameter step 920) into the second circumferential accommodation wall (21) having a larger inside diameter than the first circumferential wall, therewith forming the second internal rebate (23).

13. Pipe coupling (1; 101) according to claims 11 and 12, wherein the base ring is located within the second internal rebate (23), while the engaging ring is located at least partially within the first internal rebate (19), wherein the clamping projection is configured for abutting against the inner surface of the first circumferential wall.

14. Assembly of a plastic cylindrical pipe (2) and a pipe coupling (1; 101) for connection to the plastic pipe (2) according to any one of the preceding claims.

15. Method for assembling a pipe coupling (1; 101) for connection to a plastic cylindrical pipe (2), wherein the pipe coupling is a pipe coupling according to any one of the claims 1-13, wherein the method comprises the steps of:
- inserting the sealing ring (24; 124; 224) into the insertion part, in particular into the internal rebate;
- arranging the locking ring (70; 170); and
- inserting the plastic cylindrical pipe into the pipe coupling.

16. Method according to claim 15, wherein the step of arranging the locking ring (70; 170) comprises the step of arranging the locking ring at the plastic casing (10; 110; 210), and wherein the step of inserting the plastic cylindrical pipe comprises the step of inserting the plastic cylindrical pipe through the sealing ring and the locking ring, or.
wherein the step of arranging the locking ring comprises the step of arranging the locking at the plastic cylindrical pipe, and wherein the step of inserting the plastic cylindrical pipe comprises the steps of inserting the plastic cylindrical pipe through the locking ring and arranging the locking ring to the plastic casing (10; 110; 210).

## Patentansprüche

1. Rohrkopplung (1; 101), die zum Verbinden eines zylindrischen Plastikrohrs (2) konfiguriert ist, wobei die Rohrkopplung (1; 101) folgende Merkmale aufweist:
ein Einführungsteil (11) mit einer Einführungsöffnung, die dazu konfiguriert ist, zu ermöglichen, dass das zylindrische Plastikrohr (2) in die Rohrkopplung in einer Einführungsrichtung (A) eingeführt wird,
wobei das Einführungsteil (11) ein Kunststoffgehäuse (10; 110; 210) aufweist, das mit einer Umfangseinführungswand (14) versehen ist, in die das Rohr (2) passt, wobei die Einführungswand (14) über eine Durchmesserstufe (16, 20) in eine Umfangsaufnahmewand (17, 21) mit einem größeren Innendurchmesser als die Einführungswand übergeht, wobei die Aufnahmewand einen Innenfalz (19, 23) begrenzt;
einen Dichtungsring (24; 124; 224), der in den Falz (19, 23) eingeführt ist, welcher von der Aufnahmewand begrenzt wird, und zum Ineingriffnehmen des zylindrischen Kunststoffrohrs (2) in einer abdichtenden Weise und zum Bereitstellen einer wasserfesten Dichtung zwischen dem Rohr (2) und dem Kunststoffgehäuse (10; 110; 210) konfiguriert ist; und
einen Verriegelungsring (70; 170) mit einer Widerhakeneinrichtung (78; 178), die zum Ineingriffnehmen des zylindrischen Kunststoffrohrs (2) derart konfiguriert ist, dass es ermöglicht wird, dass das zylindrische Kunststoffrohr in den Verriegelungsring (70; 170) in der Einführungsrichtung eingeführt wird, und dass es verhindert wird, dass sich dasselbe in einer Richtung entgegengesetzt zu der Einführungsrichtung bewegt, wobei der Verriegelungsring dazu konfiguriert ist, sich lösbar an dem Gehäuse zu verriegeln,
wobei der Verriegelungsring (70; 170) eine zylindrische Umfangswand (71; 171) mit einem freien Endrand (72; 172), einem anstoßenden Endrand (74; 174), der dem freien Endrand (72; 172) gegenüberliegt, der zum Anstoßen gegen die Endfläche (75; 175) der zylindrischen Aufnahmewand (17, 21; 121) konfiguriert ist, und eine Außenoberfläche (73; 173) aufweist, die sich zwischen dem freien Endrand und dem anstoßenden Endrand erstreckt,
wobei der Verriegelungsring (70; 170) einen oder mehrere Verriegelungsfinger (76; 176) aufweist, die zum lösbaren Verriegeln des Verriegelungsrings (70; 170) an dem Gehäuse (10; 110; 210) konfiguriert sind, wobei sich die Verriegelungsfinger in einer Richtung weg von der zylindrischen Umfangswand erstrecken, **dadurch gekennzeichnet, dass** die Verriegelungsfinger an dem anstoßenden Endrand bereitgestellt sind, und dadurch, dass an dem Ende, das weg von der zylindrischen Umfangswand zeigt, die Verriegelungsfinger einen nach innen gerichteten Verriegelungsabschnitt (77; 177) zur Verriegelung des Verriegelungsrings in Bezug auf das Gehäuse aufweisen.

2. Rohrkopplung (1; 101) gemäß Anspruch 1, wobei die Widerhakeneinrichtung (78; 178) sich in die und schräg zu der Einführungsrichtung erstreckt; und/oder
wobei die Widerhakeneinrichtung (178) des Verriegelungsrings (170) zwei oder mehr Widerhakenfinger (178) aufweist, die zum Ineingriffnehmen des zylindrischen Kunststoffrohrs (2) konfiguriert sind, wobei die zwei oder mehr Widerhakenfinger (178) nach innen von der zylindrischen Umfangswand in die und schräg zu der Einführungsrichtung hervorstehen und um die zylindrische Umfangswand herum verteilt sind, wobei die Widerhakeneinrichtung des Verriegelungsrings vorzugsweise 4 oder mehr Widerhakenfinger aufweist, vorzugsweise 8 oder mehr Widerhakenfinger, wobei die zwei oder mehr Widerhakenfinger vorzugsweise aus Metall bestehen, wobei der Verriegelungsring (170) vorzugsweise vollständig aus Metall besteht.

3. Rohrkopplung (1) gemäß einem der Ansprüche 1-2, wobei die Widerhakeneinrichtung eine Widerhakenklappe (78) aufweist, die zum Ineingriffnehmen des zylindrischen Kunststoffrohrs konfiguriert ist.

4. Rohrkopplung (1) gemäß Anspruch 3, wobei die Widerhakenklappe (78) an der Innenoberfläche der zylindrischen Umfangswand des Verriegelungsrings (70) bereitgestellt ist, wobei die Widerhakenklappe (78) sich von der Innenoberfläche in die und schräg zu der Einführungsrichtung erstreckt, wobei die Widerhakenklappe (78) vorzugsweise mit einer Widerhakeneinrichtungsführungsoberfläche (79) versehen ist, die in die und schräg zu der Einführungsrichtung ausgerichtet ist, wobei sich optional ein ringförmiger Raum (80) zwischen der Widerhakenklappe (78) und der Innenoberfläche der zylindrischen Umfangswand des Verriegelungsrings (70) befindet.

5. Rohrkopplung (1) gemäß einem der Ansprüche 3-4, wobei die Widerhakenklappe (78) mit einem Schlitz versehen ist, der eine Unterbrechung in der Widerhakenklappe (78) in der Umfangsrichtung definiert, welche sich vorzugsweise in die und schräg zu der Einführungsrichtung erstreckt.

6. Rohrkopplung (1; 101) gemäß einem der vorhergehenden Ansprüche, wobei die Außenoberfläche des Gehäuses mit einem Verriegelungsrand versehen ist, und wobei der Verriegelungsrand und der Verriegelungsring (70; 170) derart konfiguriert sind, dass der Verriegelungsring (70; 170) lösbar hinter dem Verriegelungsrand in Eingriff tritt, bei Betrachtung in der Einführungsrichtung, wobei vorzugsweise an der Durchmesserstufe die Außenoberfläche der Einführungswand in die Außenoberfläche der Umfangsaufnahmewand mit einem größeren Außendurchmesser als die Einführungswand übergeht, wodurch der Verriegelungsrand definiert wird.

7. Rohrkopplung (1; 101) gemäß einem der vorherigen Ansprüche, wobei der Dichtungsring in der Form eines Einführungsrings (24; 124; 224) bereitgestellt ist, der einen steifen Basisring (30; 130; 230) und einen flexiblen Ineingriffnahmering (34; 134; 234) aufweist, wobei sich der Ineingriffnahmering von dem Basisring an der Seite desselben erstreckt, die weg von der Einführungsöffnung zeigt, und zum Ineingriffnehmen des zylindrischen Kunststoffrohrs in einer wasserdichten Weise konfiguriert ist; und/oder
wobei an der Außenseite der Aufnahmewand das Gehäuse mit einer hervorstehenden Rippe (25) versehen ist, die entlang der Umfangsrichtung angeordnet ist.

8. Rohrkopplung (1; 101) gemäß Anspruch 7,
wobei der Basisring eine zylindrische Außenoberfläche aufweist, an der eine, vorzugsweise dreieckige, Sicherungsrippe (32) angeordnet ist, und die Umfangsaufnahmewand eine komplementäre, vorzugsweise dreieckige, Sicherungsausnehmung (26) aufweist, die zum Aufnehmen der dreieckigen Sicherungsrippe (32) konfiguriert ist, wobei die dreieckige Sicherungsrippe (32) vorzugsweise eine schräge Oberfläche (33) aufweist, die weg von der Einführungsöffnung gerichtet ist.

9. Rohrkopplung (1; 101) gemäß einem der Ansprüche 7-8, wobei der Basisring an dem Ende, das auf die Einführungsöffnung zeigt, mit einer schrägen Dichtungsringführungsoberfläche (37) versehen ist; und/oder
wobei sich der Ineingriffnahmering weg von dem Basisring hin zu der Mitte des Einführungsteils erstreckt, so dass der Ineingriffnahmering in Bezug auf den Basisring geneigt ist.

10. Rohrkopplung (1; 101) gemäß einem der Ansprüche 7-9, wobei der Ineingriffnahmering an dem Ende, das weg von dem Basisring zeigt, mit einem oder mehreren, vorzugsweise umfänglichen, Ineingriffnahmestegen (35; 235) versehen ist, die auf die Mitte des Einführungsteils und optional auf die Einführungsöffnung zeigen und die zum Ineingriffnehmen des einzuführenden Rohrs konfiguriert sind.

11. Rohrkopplung (1; 101) gemäß Anspruch 10, wobei der Ineingriffnahmering an dem Ende, das weg von dem Basisring zeigt, mit einem, vorzugsweise umfänglichen, Klemmvorsprung (36; 236) versehen ist, der sich hin zu der Innenoberfläche des Einführungsteils erstreckt, vorzugsweise in einer Richtung entgegengesetzt zu dem einen oder mehreren Ineingriffnahmestegen.

12. Rohrkopplung (1; 101) gemäß einem der vorhergehenden Ansprüche, wobei der Innenfalz ein zweiter Innenfalz (23) ist, die Umfangsaufnahmewand eine zweite Umfangsaufnahmewand (21) ist und die Durchmesserstufe eine zweite Durchmesserstufe (20) ist, wobei die Umfangseinführungswand über eine erste Durchmesserstufe (16) in eine erste Umfangsaufnahmewand (17) mit einem größeren Innendurchmesser übergeht, wodurch ein erster Innenfalz (19) gebildet wird, und die erste Umfangsaufnahmewand (17) über die zweite Durchmesserstufe (920) in die zweite Umfangsaufnahmewand (21) mit einem größeren Innendurchmesser als die erste Umfangswand übergeht, wodurch der zweite Innenfalz (23) gebildet wird.

13. Rohrkopplung (1; 101) gemäß Anspruch 11 und 12, wobei sich der Basisring in dem zweiten Innenfalz (23) befindet, während sich der Ineingriffnahmering zumindest teilweise in dem ersten Innenfalz (19) befindet, wobei der Klemmvorsprung zum Anstoßen gegen die Innenoberfläche der ersten Umfangswand konfiguriert ist.

14. Anordnung eines zylindrischen Kunststoffrohrs (2) und einer Rohrkopplung (1; 101) zum Verbinden des Kunststoffrohrs (2) gemäß einem der vorhergehenden Ansprüche.

15. Verfahren zum Anordnen einer Rohrkopplung (1; 101) zum Verbinden eines zylindrischen Kunststoffrohrs (2), wobei die Rohrkopplung eine Rohrkopplung gemäß einem der Ansprüche 1-13 ist, wobei das Verfahren die folgenden Schritte aufweist:
- Einführen des Dichtungsrings (24; 124; 224) in das Einführungsteil, insbesondere in den Innenfalz;
- Anordnen des Verriegelungsrings (70; 170); und
- Einführen des zylindrischen Kunststoffrohrs in die Rohrkopplung.

16. Verfahren gemäß Anspruch 15, wobei der Schritt des Anordnens des Verriegelungsrings (70; 170) den Schritt eines Anordnens des Verriegelungsrings an dem Kunststoffgehäuse (10; 110; 210) aufweist, und wobei der Schritt des Einführens des zylindrischen Kunststoffrohrs den Schritt eines Einführens des zylindrischen Kunststoffrohrs durch den Dichtungsring und den Verriegelungsring aufweist, oder
wobei der Schritt des Anordnens des Verriegelungsrings den Schritt eines Anordnens des Verriegelungsrings an dem zylindrischen Kunststoffrohr aufweist, und wobei der Schritt des Einführens des zylindrischen Kunststoffrohrs den Schritt eines Einführens des zylindrischen Kunststoffrohrs durch den Verriegelungsring und eines Anordnens des Verriegelungsrings an dem Kunststoffgehäuse (10; 110; 210) aufweist.

## Revendications

1. Raccord de tuyau (1 ; 101) configuré pour le raccordement à un tuyau cylindrique en plastique (2), dans lequel le raccord de tuyau (1 ; 101) comprend :
une partie d'insertion (11) avec une ouverture d'insertion configurée pour permettre au tuyau cylindrique en plastique (2) d'être inséré dans le raccord de tuyau (1 ; 101) dans une direction d'insert (A),
dans lequel la partie d'insertion (11) comprend un boîtier en plastique (10 ; 110 ; 210) qui est prévu avec une paroi d'insertion circonférentielle (14) dans laquelle le tuyau (2) est monté, dans lequel via un étage de diamètre (16, 20), la paroi d'insertion (14) fusionne dans une paroi de logement circonférentielle (17, 21) ayant un plus grand diamètre intérieur que la paroi d'insertion, dans lequel la paroi de logement délimite une feuillure (19, 23) ;
une bague d'étanchéité (24 ; 124 ; 224) insérée dans la feuillure (19, 23) délimitée par la paroi de logement et configurée pour mettre en prise le tuyau cylindrique en plastique (2) d'une manière étanche et pour fournir un joint d'étanchéité étanche à l'eau entre le tuyau (2) et le boîtier en plastique (10 ; 110 ; 210) ; et
une bague de verrouillage (70 ; 170) ayant un moyen d'ardillon (78 ; 178) configuré pour mettre en prise le tuyau cylindrique en plastique (2) de sorte que le tuyau cylindrique en plastique est autorisé à être inséré dans la bague de verrouillage (70 ; 170) dans la direction d'insert et est empêché de se déplacer dans une direction opposée à la direction d'insert, dans lequel la bague de verrouillage est configurée pour se verrouiller de manière réversible sur le boîtier,
dans lequel la bague de verrouillage (70 ; 170) comprend une paroi circonférentielle cylindrique (71 ; 171) ayant un bord d'extrémité libre (72 ; 172), un bord d'extrémité de butée (74 ; 174), opposé au bord d'extrémité libre (72 ; 172), configuré pour venir en butée contre la face d'extrémité (75 ; 175) de la paroi de logement cylindrique (17, 21 ; 121), et une surface externe (73 ; 173) s'étendant entre le bord d'extrémité libre et le bord d'extrémité de butée,
dans lequel la bague de verrouillage (70 ; 170) comprend un ou plusieurs doigts de verrouillage (76 ; 176) configurés pour verrouiller, de manière réversible, la bague de verrouillage (70 ; 170) sur le boîtier (10 ; 110 ; 210), lesquels doigts de verrouillage s'étendent dans une direction opposée à la paroi circonférentielle cylindrique,
**caractérisé en ce que** les doigts de verrouillage sont prévus au niveau du bord d'extrémité de butée, et **en ce que** :
au niveau de l'extrémité orientée à l'opposé de la paroi circonférentielle cylindrique, les doigts de verrouillage comprennent une partie de verrouillage dirigée vers l'intérieur (77 ; 177) pour verrouiller la bague de verrouillage par rapport au boîtier.

2. Raccord de tuyau (1 ; 101) selon la revendication 1, dans lequel le moyen d'ardillon (78 ; 178) s'étend dans et de manière oblique par rapport à la direction d'insert ; et/ou
dans lequel le moyen d'ardillon (178) de la bague de verrouillage (170) comprend deux doigts d'ardillon ou plus (178) configurés pour mettre en prise le tuyau cylindrique en plastique (2), dans lequel les deux doigts d'ardillon ou plus (178) font saillie vers l'intérieur à partir de la paroi circonférentielle cylindrique dans et de manière oblique par rapport à la direction d'insert et sont répartis autour de la paroi circonférentielle cylindrique, de préférence dans lequel le moyen d'ardillon de la bague de verrouillage comprend 4 doigts d'ardillon ou plus, de préférence 8 doigts d'ardillon ou plus de préférence dans lequel les deux doigts d'ardillon ou plus sont réalisés à partir de métal, de préférence dans lequel la bague de verrouillage (170) est complètement réalisée à partir de métal.

3. Raccord de tuyau (1) selon l'une quelconque des revendications 1 à 2, dans lequel le moyen d'ardillon comprend un rabat à ardillon (78) configuré pour mettre en prise le tuyau cylindrique en plastique.

4. Raccord de tuyau (1) selon la revendication 3, dans lequel le rabat à ardillon (78) est prévu au niveau de la surface interne de la paroi circonférentielle cylindrique de la bague de verrouillage (70), dans lequel le rabat à ardillon (78) s'étend à partir de la surface interne dans et de manière oblique par rapport à la direction d'insert, de préférence dans lequel le rabat à ardillon (78) est prévu avec une surface pilote de moyen d'ardillon (79) orientée dans et de manière oblique par rapport à la direction d'insert, dans lequel facultativement un espace annulaire (80) est situé entre le rabat à ardillon (78) et la surface interne de la paroi circonférentielle cylindrique de la bague de verrouillage (70).

5. Raccord de tuyau (1) selon l'une quelconque des revendications 3 à 4, dans lequel le rabat à ardillon (78) est prévu avec une fente définissant une interruption dans le rabat à ardillon (78) dans la direction circonférentielle, de préférence s'étendant dans et de manière oblique par rapport à la direction d'insert.

6. Raccord de tuyau (1 ; 101) selon l'une quelconque des revendications précédentes, dans lequel la surface externe du boîtier est prévue avec un bord de verrouillage, et dans lequel le bord de verrouillage et la bague de verrouillage (70 ; 170) sont configurés de sorte que la bague de verrouillage (70 ; 170) se met en prise, de manière réversible, derrière le bord de verrouillage, lorsqu'elle est observée dans la direction d'insert, de préférence dans lequel, à l'étage de diamètre, la surface externe de la paroi d'insertion fusionne dans la surface externe de la paroi de logement circonférentielle ayant un plus grand diamètre extérieur que la paroi d'insertion, définissant avec cette dernière, le bord de verrouillage.

7. Raccord de tuyau (1 ; 101) selon l'une quelconque des revendications précédentes, dans lequel la bague d'étanchéité est prévue sous la forme d'une bague d'insert (24 ; 124 ; 224) comprenant une bague de base rigide (30 ; 130 ; 230) et une bague de mise en prise flexible (34 ; 134 ; 234), dans lequel la bague de mise en prise s'étend à partir de la bague de base au niveau de son côté orienté à l'opposé de l'ouverture d'insertion et est configurée pour mettre en prise le tuyau cylindrique en plastique d'une manière étanche à l'eau ; et/ou
dans lequel au niveau du bord extérieur de la paroi de logement, le boîtier est prévu avec une nervure en saillie (25) qui est agencée le long de la circonférence.

8. Raccord de tuyau (1 ; 101) selon la revendication 7,
dans lequel la bague de base a une surface externe cylindrique au niveau de laquelle une nervure de fixation (32) de préférence triangulaire est agencée, et la paroi de logement circonférentielle a un évidement de fixation (26) complémentaire, de préférence triangulaire configuré pour recevoir la nervure de fixation (32) triangulaire, de préférence dans lequel la nervure de fixation (32) triangulaire a une surface oblique (33) dirigée à l'opposé de l'ouverture d'insertion.

9. Raccord de tuyau (1 ; 101) selon l'une quelconque des revendications 7 à 8, dans lequel la bague de base, à l'extrémité orientée vers l'ouverture d'insertion, est prévue avec une surface pilote oblique de bague d'étanchéité (37) ; et/ou
dans lequel la bague d'étanchéité s'étend à l'opposé de la bague de base vers le centre de la partie d'insertion, de sorte que la bague de mise en prise est inclinée par rapport à la bague de base.

10. Raccord de tuyau (1 ; 101) selon l'une quelconque des revendications 7 à 9, dans lequel la bague de mise en prise, à l'extrémité orientée à l'opposé de la bague de base, est prévue avec une ou plusieurs crêtes de mise en prise (35 ; 235) de préférence circonférentielles orientées vers le centre de la partie d'insertion et, facultativement, vers l'ouverture d'insertion, et configurées pour mettre en prise le tuyau à insérer.

11. Raccord de tuyau (1 ; 101) selon la revendication 10, dans lequel la bague de mise en prise, à l'extrémité orientée à l'opposé de la bague de base, est prévue avec une saillie de serrage (36 ; 236) de préférence circonférentielle s'étendant vers la surface interne de la partie d'insertion, de préférence dans une direction opposée aux une ou plusieurs crêtes de mise en prise.

12. Raccord de tuyau (1 ; 101) selon l'une quelconque des revendications précédentes, dans lequel la feuillure interne est une deuxième feuillure interne (23), la paroi de logement circonférentielle est une deuxième paroi de logement circonférentielle (21) et l'étage de diamètre est un deuxième étage de diamètre (20), dans lequel la paroi d'insertion circonférentielle fusionne via un premier étage de diamètre (16) dans une première paroi de logement circonférentielle (17) ayant un plus grand diamètre interne, formant avec cette dernière, une première feuillure interne (19), et la première paroi de logement circonférentielle (17) fusionne via le deuxième étage de diamètre (920) dans la deuxième paroi de logement circonférentielle (21) ayant un plus grand diamètre interne que la première paroi circonférentielle, formant avec cette dernière, la deuxième feuillure interne (23).

13. Raccord de tuyau (1 ; 101) selon les revendications 11 et 12, dans lequel la bague de base est positionnée à l'intérieur de la deuxième feuillure interne (23), alors que la bague de mise en prise est positionnée au moins partiellement à l'intérieur de la première feuillure interne (19), dans lequel la saillie de serrage est configurée pour venir en butée contre la surface interne de la première paroi circonférentielle.

14. Ensemble composé d'un tuyau cylindrique en plastique (2) et d'un raccord de tuyau (1 ; 101) pour le raccordement au tuyau en plastique (2) selon l'une quelconque des revendications précédentes.

15. Procédé pour assembler un raccord de tuyau (1 ; 101) pour le raccordement à un tuyau cylindrique en plastique (2), dans lequel le raccord de tuyau est un raccord de tuyau selon l'une quelconque des revendications 1 à 13, dans lequel le procédé comprend les étapes comprenant les faits de :
- insérer la bague d'étanchéité (24 ; 124 ; 224) dans la partie d'insertion, en particulier dans la feuillure interne ;
- agencer la bague de verrouillage (70 ; 170) ; et
- insérer le tuyau cylindrique en plastique dans le raccord de tuyau.

16. Procédé selon la revendication 15, dans lequel l'étape pour agencer la bague de verrouillage (70 ; 170) comprend l'étape pour agencer la bague de verrouillage au niveau du boîtier en plastique (10 ; 110 ; 210), et dans lequel l'étape pour insérer le tuyau cylindrique en plastique comprend l'étape pour insérer le tuyau cylindrique en plastique à travers la bague d'étanchéité et la bague de verrouillage, ou
dans lequel l'étape pour agencer la bague de verrouillage comprend l'étape pour agencer le verrouillage au niveau du tuyau cylindrique en plastique, et dans lequel l'étape pour insérer le tuyau cylindrique en plastique comprend les étapes pour insérer le tuyau cylindrique en plastique à travers la bague de verrouillage et agencer la bague de verrouillage sur le boîtier en plastique (10 ; 110 ; 210).
